# EUROPÄISCHE PATENTANMELDUNG

(11) **EP 1 075 993 A1**
(43) Veröffentlichungstag der Anmeldung: **14.02.2001**
(21) Anmeldenummer: 00116827.7
(22) Anmeldetag: 04.08.2000
(51) Int. Cl.: B60T 11/30, F16B 31/02

(54) **Entlüftungsschraube für Bremsanlagen**

(30) Priorität: 10.08.1999 DE 29913968 U
(71) Anmelder: Heinrich, Lothar, 50737 Köln (DE)
(72) Erfinder: Heinrich, Lothar, 50737 Köln (DE)
(74) Vertreter: Selting, Günther

(57) **Zusammenfassung**

Die Entlüftungsschraube weist am vorderen Ende einen Dichtkonus (18) auf, welcher einen Sitz des Bremsgehäuses verschließt. Die Entlüftungsschraube wird mit einem Gewindschaft (21) in eine Gewindebohrung des Bremsgehäuses eingeschraubt, bis das Drehmoment ausreicht, um einen sicheren Halt der Entlüftungsschraube zu gewährleisten. Um dies zu erreichen, ist die Entlüftungsschraube mit einem an einer Sollbruchstelle (26) abreißbaren Kopfstück (27) versehen, an dem ein Drehwerkzeug angreifen kann. Das Abreißen an der Sollbruchstelle (26) signalisiert, daß die Entlüftungsschraube ordnungsgemäß angezogen wurde.

## Beschreibung

Die Erfindung betrifft eine Entlüftungsschraube für hydraulische Bremsanlagen, mit einem Gewindeschaft, der am vorderen Ende einen Dichtkonus und am rückwärtigen Ende ein Kopfstück zum Angreifen eines Drehwerkzeugs aufweist und mit einer längslaufenden Entlüftungsbohrung versehen ist.

Hydraulische Bremsanlagen müssen, wenn sie mit Bremsflüssigkeit gefüllt werden, an den einzelnen Bremsen entlüftet werden, um sicherzustellen, daß das gesamte Volumen ausschließlich mit Hydraulikflüssigkeit gefüllt ist und keine Luft enthält. Da Luft kompressibel ist, würde im Falle von Lufteinschlüssen die Bremskraft nur unzureichend bzw. mit Verzögerung auf die Bremse übertragen werden. Es ist üblich, bei Fahrzeugen an den Bremsen jeweils eine Entlüftungsschraube vorzusehen. Diese Entlüftungsschraube weist einen Dichtkonus auf, der eine Öffnung des Hydrauliksystems abdichtend verschließt. Zum Entlüften kann die Entlüftungsschraube gelockert werden, so daß Luft an dem Dichtkonus vorbei durch eine Entlüftungsbohrung der Entlüftungsschraube entweichen kann. Nach dem Entweichen der Luft wird die Entlüftungsschraube festgezogen, wobei der Dichtkonus fest gegen den metallischen Sitz der Bremse gedrückt wird. Dieser Anpreßdruck muß hinreichend groß sein, um ein Losdrehen der Entlüftungsschraube durch Vibrationen und andere mechanische Beanspruchungen zu verhindern. Andererseits besteht die Gefahr, daß die Entlüftungsschraube bei zu starkem Festziehen abreißt. Es ist daher wichtig, die Entlüftungsschraube mit definiertem Drehmoment festzuziehen. Eine unzureichend festgezogene Entlüftungsschraube hat in neuerer Zeit zu einem Bremsversagen bei einem Rennwagen geführt und einen spektakulären Autorennunfall hervorgerufen. Entsprechende Entlüftungsschrauben sind aber nicht nur in Rennwagen enthalten, sondern auch in Serienwagen, Motorrädern und anderen Fahrzeugen, die mit hydraulischen Bremssystemen ausgestattet sind. Diese Fahrzeuge unterliegen der beständigen Gefahr, daß eine Entlüftungsschraube sich löst und dadurch Bremsflüssigkeit austritt mit der Folge eines Bremsversagens.

Man könnte Entlüftungsschrauben grundsätzlich mit einem Drehmomentschlüssel mit definiertem Drehmoment festziehen. Hierbei besteht aber keine Gewähr dafür, daß in Werkstätten der geeignete Drehmomentschlüssel tatsächlich verwendet wird. Außerdem befinden sich Entlüftungsschrauben häufig an schwer zugänglichen Stellen, die mit einem normalen Drehmomentschlüssel nicht ohne weiteres erreichbar sind. Schließlich besteht bei Verwendung eines Drehmomentschlüssels keine Anzeige oder Dokumentation darüber, daß das korrekte Drehmoment tatsächlich aufgebracht wurde.

Der vorliegenden Erfindung liegt die Aufgabe zugrunde, eine Entlüftungsschraube für hydraulische Bremsanlagen zu schaffen, die ohne meßtechnischen Aufwand das Anziehen der Entlüftungsschraube mit dem korrekten Drehmoment gewährleistet und darüberhinaus die Tatsache des korrekten Anziehens dokumentiert.

Die Lösung dieser Aufgabe erfolgt erfindungsgemäß mit den im Anspruch 1 angegebenen Merkmalen.

Bei der erfindungsgemäßen Entluftungsschraube ist das Kopfstück durch eine bei einem vorgegebenen definierten Drehmoment reißende Sollbruchstelle mit dem Gewindeschaft verbunden. Das Kopfstück, an dem das Drehwerkzeug zum Festziehen der Gewindeschraube angreift, reißt also bei Erreichen des definierten Drehmoments ab, so daß der Gewindeschaft festsitzend in der entsprechenden Gewindebohrung der Bremse angeordnet ist und dabei die Entlüftungsöffnung der Bremse mit der erforderlichen Schließkraft verschließt. Das Festziehen der Entlüftungsschraube kann ganz sorglos durchgeführt werden, ohne daß ein unbeabsichtigtes Zerbrechen stattfindet. Wenn das Kopfstück abgerissen ist, hat der Monteur die Sicherheit, daß die Entlüftungsschraube mit dem geforderten Drehmoment festgezogen ist und sich nicht beim Fahren unbeabsichtigt lösen kann. Andererseits besteht auch die Sicherheit, daß die Entlüftungsschraube nicht an einer undefinierten anderen Stelle reißt, an der Undichtigkeiten hervorgerufen werden könnten. Ein weiterer Vorteil besteht darin, daß durch Inspektion der Bremse jederzeit festgestellt werden kann, daß die Entlüftungsschraube mit dem geforderten Drehmoment ordnungsgemäß angezogen wurde, nämlich dadurch, daß das Kopfstück fehlt. Ist das Kopfstück noch vorhanden, so deutet dies auf ein ungenügendes Festziehen der Entlüftungsschraube hin.

Das abreißende Kopfstück kann ein Außenmehrkant, ein Innenmehrkant oder ein anderer Schraubenkopf sein, der das Angreifen eines Drehwerkzeugs ermöglicht.

Gemäß einer bevorzugten Ausführungsform der Erfindung ist an dem Gewindeschaft ein nicht abreißendes weiteres Kopfstück vorgesehen. Dieses weitere Kopfstück dient dazu, die Entlüftungsschraube aus der Gewindebohrung der Bremse wieder herausdrehen zu können, wenn ein erneutes Entlüften notwendig ist. Allerdings sollte durch geeignete Maßnahmen verhindert werden, daß das weitere Kopfstück von einem Werkzeug in Festziehrichtung gedreht werden kann, weil es dann möglich wäre, eine bereits gebrauchte und aus einer Bremse losgedrehte Entlüftungsschraube erneut zu benutzen. Das weitere Kopfstück sollte also nur zum Drehen in Löserichtung geeignet sein.

Gemäß einer weiteren bevorzugten Ausgestaltung der Erfindung ist vorgesehen, daß der Gewindeschaft eine axiale Mehrkantöffnung aufweist, um welche die Sollbruchstelle herumläuft. Diese Mehrkantöffnung kann durch eine Öffnung im Kopfstück verlängert sein. Auf diese Weise ist es möglich, an dem Gewindeschaft auch nach Abreißen des Kopfstücks mit einem Werkzeug anzugreifen, um die Entlüftungsschraube aus dem Bremsgehäuse zu entfernen.

Im folgenden werden unter Bezugnahme auf die Zeichnungen Ausführungsbeispiele der Erfindung näher erläutert.

Es zeigen:
- Fig. 1: den schematischen Aufbau des Bremsgehäuses einer Scheibenbremse mit Entlüftungsschraube,
- Fig. 2: eine erste Ausführungsform der Entlüftungsschraube, und
- Fig. 3: eine zweite Ausführungsform der Entlüftungsschraube.

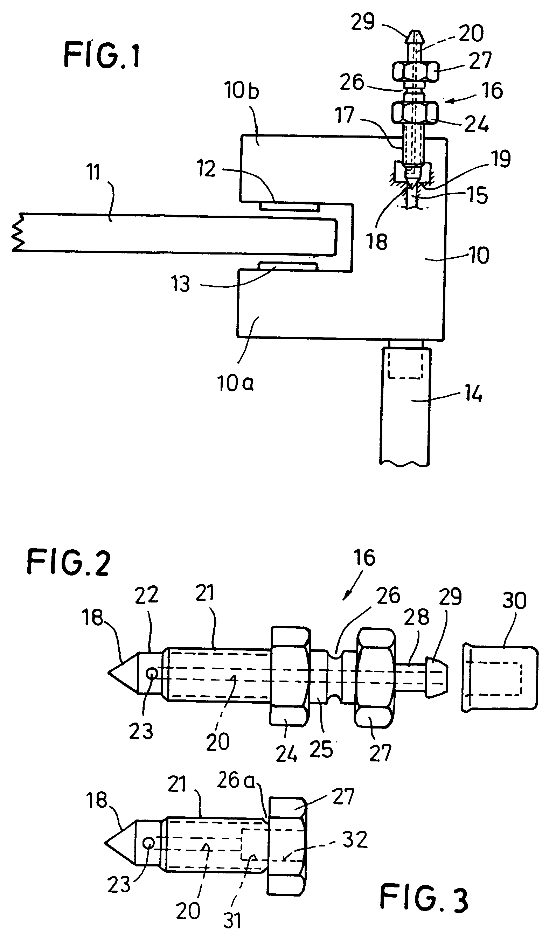

In Figur 1 ist das Bremsgehäuse 10 bzw. der Bremssattel einer Scheibenbremse dargestellt, wobei zwischen den beiden Schenkeln 10a,10b des Bremsgehäuses 10 der Rand der rotierenden Bremsscheibe 11 hindurchläuft. An den Schenkeln befinden sich hydraulische Kolben 12,13, die mit Hydraulikdruck beaufschlagt werden und dann reibend an entgegengesetzten Seiten der Bremsscheibe 11 angreifen. In das Bremsgehäuse führt eine druckfeste Hydraulikleitung 14. Das Bremssystem muß einem Hydraulikdruck von mindestens 70 bar standhalten.

In dem Bremsgehäuse 10 befindet sich ein mit dem Hydrauliksystem in Verbindung stehender Entlüftungskanal 15, der durch eine Entlüftungsschraube 16 verschlossen ist, welche von außen in eine Gewindebohrung 17 des Bremsgehäuses 10 eingeschraubt ist. Die Entlüftungsschraube 16 weist am vorderen Ende einen Dichtkonus 18 auf, der gegen einen ringförmigen Sitz 19 am Ende der Entlüftungsbohrung 15 drückt und diese verschließt.

Durch eine längslaufende Entlüftungsbohrung 20, die sich durch die Entlüftungsschraube 16 erstreckt, kann Luft und/oder Flüssigkeit nach außen abgeführt werden. Nach beendeter Entlüftung wird die Entlüftungsschraube 16 festgezogen, so daß der Dichtkonus 18 den Sitz 19 verschließt. Da sowohl der Sitz 19 als auch der Dichtkonus 18 aus Metall bestehen, hat die Dichtung einen nur geringen elastischen Verformungsweg. Die Entlüftungsschraube muß daher mit einem relativ hohen genau bemessenen Drehmoment festgezogen werden. Anderenfalls würde die Entlüftungsschraube sich während des Fahrens unbeabsichtigt lösen können.

Die Entlüftungsschraube 16 ist in Figur 2 vergrößert dargestellt. Sie weist einen Gewindeschaft 21 auf, der am vorderen Ende durch einen gewindelosen Abschnitt 22 verringerten Durchmessers verlängert ist. Von dem Abschnitt 22 aus erstreckt sich der Dichtkonus 18. Im Bereich des Abschnitts 22 befindet sich die Öffnung einer Querbohrung 23, die mit der Entlüftungsbohrung 20 in Verbindung steht.

Am rückwärtigen Ende des Gewindeschafts befindet sich ein Kopfstück 24, an das sich ein Schaft 25 mit einer Sollbruchstelle 26 anschließt. Am rückwärtigen Ende des Schafts 25 befindet sich ein Kopfstück 27. Von dem Kopfstück 27 steht axial ein Nippel 28 mit einer Schlauch-Rückzugssicherung 29 ab. Auf den Nippel 28 wird ein durchsichtiger Schlauch aufgeschoben, dessen anderes Ende in ein Behältnis gehalten wird. Durch den Schlauch hindurch kann dann beobachtet werden, ob die ablaufende Flüssigkeit Blasen enthält.

Auf den Nippel 28 wird eine Schutzkappe 30 aus Gummi aufgesetzt.

Die Kopfstücke 24 und 27 sind Mehrkant-Kopfstücke, z.B. Sechskante, an denen ein Schraubenschlüssel angreifen kann. Die in die Gewindebohrung 17 eingeschraubte Entlüftungsschraube 16 wird mit einem Schraubenschlüssel, der an das Kopfstück 27 angesetzt wird, gedreht bis das erforderliche Anzugsdrehmoment erreicht ist und der Schaft 25 an der Solbruchstelle 26 reißt. Die Sollbruchstelle 26 besteht aus einer Schwächungsstelle verminderten Querschnitts. Im übrigen besteht die Entlüftungsschraube 16 aus einem einstückigen Metallteil, beispielsweise aus Messing.

Wenn der rückwärtige Teil mit dem Kopfstück 27 abgerissen ist, ist dies ein Zeichen dafür, daß die Entluftungsschraube ordnungsgemäß eingesetzt und festgezogen wurde. Die Entlüftungsschraube kann entfernt werden, indem das weitere Kopfstück 24 mit einem Schraubenschlüssel gedreht wird.

Eine weitere Ausführungsform einer Entlüftungsschraube 16a ist in Figur 3 dargestellt. Hier befindet sich das abreißbare Kopfstück unmittelbar am rückwärtigen Ende des Gewindeschafts 21. Dieser enthält eine axiale Mehrkantöffnung 31, deren Rand mit dem Kopfstück 27 verbunden ist, wobei die Übergangsstelle eine ringförmige Sollbruchstelle 26a bildet. Das Kopfstück 27 ist auch hier zusammen mit dem Gewindschaft 21 einstückiger Bestandteil der Entlüftungsschraube. Die Mehrkantöffnung 31 im Gewindeschaft 21 setzt sich zum rückwärtigen Ende durch eine Öffnung 32 im Kopfstück 27 fort. Das Kopfstück 27 ist auch hier ein Außenmehrkant. Beim Festziehen der Entlüftungsschraube reißt es ab, wenn das erforderliche Drehmoment erreicht ist. Soll die Entlüftungsschraube aus der Gewindebohrung 17 wieder entfernt werden, kann mit einem Imbußschlüssel in die Mehrkantöffnung 31 des Gewindeschafts- 21 eingegriffen und dieser losgedreht werden.

## Patentansprüche

1. Entlüftungsschraube für hydraulische Bremsanlagen, mit einem Gewindschaft (21), der am vorderen Ende einen Dichtkonus (18) und am rückwärtigen Ende ein Kopfstück (27) zum Angreifen eines Drehwerkzeugs aufweist, und mit einer längslaufenden Entlüftungsbohrung (20) versehen ist,
**dadurch gekennzeichnet,**
daß das Kopfstück (27) durch eine bei einem vorgegebenen definierten Drehmoment reißende Sollbruchstelle (26,26a) mit dem Gewindeschaft (21) verbunden ist.

2. Entlüftungsschraube nach Anspruch 1, dadurch gekennzeichnet, daß an dem Gewindeschaft (21) ein nicht abreißendes weiteres Kopfstück (24) vorgesehen ist.

3. Entlüftungsschraube nach Anspruch 1 oder 2, dadurch gekennzeichnet, daß der Gewindeschaft (21) eine axiale Mehrkantöffnung (31) aufweist, um welche die Sollbruchstelle (26a) herumläuft.

4. Entlüftungsschraube nach Anspruch 3, dadurch gekennzeichnet, daß die Mehrkantöffnung (31) durch eine Öffnung (32) im Kopfstück (27) verlängert ist.
